# EUROPÄISCHE PATENTSCHRIFT

(11) **EP 2 257 506 B1**
(45) Veröffentlichungstag und Bekanntmachung des Hinweises auf die Patenterteilung: **01.04.2015**
(21) Anmeldenummer: 09715713.5
(22) Anmeldetag: 25.02.2009
(51) Int. Cl.: C04B 30/00, B32B 5/18, B32B 27/14, B32B 27/30, E04B 1/78, E04B 1/80, E04B 1/94, E04C 2/20

(54) **VERFAHREN ZUR HERSTELLUNG EINES PLATTEN- ODER PROFILFÖRMIGEN BAUELEMENTES SOWIE PLATTEN- ODER PROFILFÖRMIGES BAUELEMENT**
METHOD FOR PRODUCING A FLAT OR PROFILED COMPONENT, AND FLAT OR PROFILED COMPONENT
PROCÉDÉ DE FABRICATION D'UN ÉLÉMENT DE CONSTRUCTION EN FORME DE PLAQUE OU DE PROFILÉ ET ÉLÉMENT DE CONSTRUCTION EN FORME DE PLAQUE OU DE PROFILÉ

(30) Priorität: 28.02.2008 DE 102008011627
(43) Veröffentlichungstag der Anmeldung: 08.12.2010
(73) Patentinhaber: STO SE & Co. KGaA, 79780 Stühlingen (DE)
(72) Erfinder: KOERDT, Frithjof, 89312 Günzburg (DE); PFEIFFER, Christian, 89423 Gundelfingen (DE)
(74) Vertreter: Gottschalk, Matthias
(86) Internationale Anmeldenummer: PCT/EP2009/001335
(87) Internationale Veröffentlichungsnummer: WO 2009/106310

(56) Entgegenhaltungen:
- EP-A- 0 399 514
- DE-A1- 2 058 862
- DE-A1- 19 539 309
- DE-U1- 8 714 179
- DE-U1- 8 901 791

## Beschreibung

Die Erfindung betrifft ein Verfahren zur Herstellung eines platten- oder profilförmigen Bauelementes, das insbesondere als Wand-, Decken- oder Fußbodenbauteil einsetzbar ist, unter Verwendung einer homogenen Mischung aus Blähglasgranulat und einem anorganischen oder organischen Bindemittel. Weiterhin betrifft die Erfindung ein platten- oder profilförmiges Bauelement das unter Verwendung einer homogenen Mischung aus Blähglasgranulat und einem anorganischen oder organischen Bindemittel nach einem solchen Verfahren hergestellt worden ist.

Platten- oder profilförmige Bauelemente sind bei der Errichtung von Gebäuden vielseitig einsetzbar. Sie können Bestandteil einer Wand-, Decken- oder Fußbodenkonstruktion sein. Entsprechend dem jeweiligen Verwendungszweck können sie Anforderungen im Hinblick auf beispielsweise den Wärmeschutz, Schallschutz oder Brandschutz erfüllen. Der jeweilige Verwendungszweck bestimmt auch die sonstigen bauphysikalischen Eigenschaften, die das platten- oder profilförmige Bauelement gegebenenfalls aufweisen muss. Ist beispielsweise der Einsatz im Außenbereich geplant, muss sich das Bauelement in der Regel als feuchtigkeitsunempfindlich oder sogar wasserabweisend erweisen. Darüber hinaus kann ein platten- oder profilförmiges Bauelement auch hohen mechanischen Beanspruchungen ausgesetzt sein, beispielsweise wenn es Bestandteil einer Fußbodenkonstruktion ist und demzufolge in der Lage sein soll, hohe Verkehrslasten aufnehmen zu können. Gefordert wird regelmäßig auch, dass das jeweilige Bauelement vor Ort, d.h. auf der Baustelle, leicht zu handhaben ist. Als vorteilhaft erweisen sich daher Bauelemente mit einem geringen Raum- oder Flächengewicht, da sie weiterhin Abmessungen des Bauelementes ermöglichen, die eine rationelle Bauweise gewährleisten.

Es zeigt sich, dass an ein derartiges Bauelement Anforderungen ganz unterschiedlicher Art gestellt werden, denen in der Regel nicht in gleichem Maße entsprochen werden kann. Es werden daher von der Bauindustrie spezielle Bauelemente entwickelt und angeboten, die im Hinblick auf den jeweiligen Verwendungszweck optimiert sind.

Ein solches Bauelement stellt beispielsweise die Schallabsorptionsplatte der EP 0 399 514 A1 dar. Die hierin beschriebene Schallabsorptionsplatte besteht aus einer Vielzahl von mit einem Bindemittel überzogenen, anorganischen Teilchen, die nur an den Berührungsstellen der Überzüge haftend miteinander verbunden sind und Schallabsorptionskammern unterschiedlicher Größe einschließen. Als anorganische Teilchen finden Blähglaskugeln bzw. -körner Einsatz, die mit Polystyrolkugeln vermischt werden und nach Zugabe eines Zweikomponenten-Bindemittels auf Epoxidharzbasis zu einem Bauelement heiß verdichtet werden. Dabei werden die Polystyrolkugeln eingeschmolzen und hinterlassen Hohlräume, die die besagten Schallabsorptionskammern bilden. Gleichwohl die vorgeschlagene Platte eine Vielzahl positiver Eigenschaften besitzen soll, beispielsweise eine hohe Stabilität bei einer gleichzeitig beachtlichen Leichtigkeit, kommen ihre Vorzüge vorrangig jedoch nur beim Einsatz als Schallabsorptionsplatte zur Geltung.

Aus der DE 87 14 179 U1 ist ferner ein Dämmpaneel bekannt, das einen Kern aus einem Dämmmaterial mit einer auf wenigstens einer Außenseite des Dämmmaterials gehaltenen Deckschicht aus Polymer-Beton umfasst. Die Deckschicht aus Polymer-Beton soll die Eigenschaften des Dämmpaneels im Hinblick auf das Brandverhalten, die Stoßempfindlichkeit und die Reinigungsmöglichkeit verbessern. Als kernbildendes Dämmmaterial wird Polystyrol-Schaum vorgeschlagen.

Aus der DE 89 01 791 U1 geht zudem ein mehrschichtiges Wandelement hervor, das eine als Sperrschicht ausgebildete mittlere Schicht besitzt, die über beidseitig aufgebrachte Klebstoffschichten mit außenliegenden Schichten aus einem Schaumstoff verbunden ist. Die Sperrschicht dient der Unterbindung eines Stoffaustausches und kann aus einem geschlossenporigen Werkstoff, beispielsweise aus Schaumglas oder einem sonstigen geschäumten Kunststoff bestehen.

Des Weiteren ist aus der DE 20 58 862 A1 ein Verfahren zur Herstellung von Leichtbauelementen aus geblähtem Material bekannt, bei dem die Festigkeit des Leichtbauelements über die gesamte Materialdicke gesteuert wird. Damit ist es möglich, ein Leichtbauelement mit örtlich schwankender Festigkeit zu schaffen.

Aufgabe der vorliegenden Erfindung ist es, ein platten- oder profilförmiges Bauelement sowie ein Verfahren zu dessen Herstellung bereitzustellen, das vielseitig einsetzbar, darüber hinaus einfach und kostengünstig herstellbar ist.

Die Aufgabe wird gelöst durch ein Verfahren mit den Merkmalen des Anspruchs 1 sowie einem platten- oder profilförmigen Bauelement mit den Merkmalen des Anspruchs 8. Vorteilhafte Weiterbildungen werden in Unteransprüchen beschrieben.

Das Verfahren zur Herstellung eines platten- oder profilförmigen Bauelementes umfasst erfindungsgemäß wenigstens die folgenden Schritte:
- Einbringen eines Teils der homogenen Mischung aus Blähglasgranulat und Bindemittel in eine Form oder in eine die Form ersetzende Hilfsvorrichtung im Falle eines formlosen Verfahrens, insbesondere bei der kontinuierlichen Produktion,
- Ausbilden einer Schicht aus Polystyrol durch Auflegen einer Polystyrol-Platte oder Aufbringen einer Schüttung aus Polystyrolkugeln auf der homogenen Mischung,
- Verteilen des restlichen Teils der homogenen Mischung auf der Polystyrol-Schicht,
- Verdichten durch Pressen und Aushärten zu einem platten- oder profilförmigen Bauelement unter Einwirkung von Wärme bei einer Temperatur von ≥90°C, wobei die maximale Temperatur zwischen 100°C und 120°C, vorzugsweise zwischen 100°C und 110°C, liegt.

Die einzelnen Schritte des erfindungsgemäßen Verfahrens führen dazu, dass ein auf diese Weise hergestelltes platten- oder profilförmiges Bauelement eine im Querschnitt geschichtete Struktur aufweist, die aus wenigstens drei Schichten besteht. Bei genau drei Schichten bestehen die beiden äußeren Schichten jeweils aus einer verfestigten homogenen Struktur, deren Ausgangsstoffe wenigstens Blähglasgranulat und ein Bindemittel umfassen, und einem zwischen diesen beiden äußeren Schichten liegenden Kern aus Polystyrol. Deckschichten und Kern weisen jeweils unterschiedliche bauphysikalische Eigenschaften auf, die sich bei einem nach dem erfindungsgemäßen Verfahren hergestellten Bauelement in überraschender Weise ergänzen. Hierzu später mehr.

Das Verfahren, bei dem der Kern durch Einlegen einer Polystyrol-Platte ausgebildet wird, ist besonders einfach durchführbar. Es können handelsübliche Polystyrol-Platten mit oder ohne Vorbehandlung, beispielsweise durch Aufrauen oder Perforieren der Oberfläche, verwendet werden. Als vorteilhaft hat sich auch das Verfahren herausgestellt, bei dem zur Ausbildung des Kerns eine Schüttung aus Polystyrolkugeln auf die homogene Mischung aus Blähglasgranulat und Bindemittel aufgebracht wird. Das zunächst als loses Haufwerk aufgebrachte Polystyrol bildet insbesondere an den Grenzschichten Hohlräume aus, in die beim Verfahrensschritt des Verdichtens mittels Pressen Bindemittel eindringen kann. Dabei lässt sich die Eindringtiefe über die Temperatur beim Verdichten sowie die Dauer des Verdichtens beeinflussen. Gemäß einer Ausführung der Erfindung verbleibt nach dem Verdichten und Aushärten des Bauelementes eine homogene Polystyrolschicht als Kern, wobei durch in die Hohlräume der Grenzschichten eingedrungenes Bindemittel die Haftung der Deckschichten an der Polystyrolschicht verbessert wird. Die Temperatur ist bevorzugt derart gewählt, dass das Aushärten in kurzer Zeit erfolgt. In Abhängigkeit von der gewünschten Bauteilstärke und der konkret verwendeten Rezeptur beansprucht der Vorgang des Aushärtens zwischen 120 und 540 Sekunden, vorzugsweise zwischen 160 und 480 Sekunden. Dabei kann das Polystyrol seine Struktur geringfügig verändern. Die maximale Temperatur liegt zwischen 100°C und 120°C, vorzugsweise zwischen 100°C und 110° C, d.h. in Abhängigkeit von dem jeweils verwendeten Polystyrol in der Regel unterhalb des Schmelzpunktes des Polystyrols.

Als Bindemittel findet vorzugsweise Epoxidharz Verwendung. Darüber hinaus können aber auch Wasserglas als Beispiel für ein mineralisches Bindemittel, Polyurethane, polymere Dispersionen oder UP-Harze als weitere Vertreter organischer Bindemittel eingesetzt werden. Der Einsatz von Epoxidharz als Bindemittel in Verbindung mit Blähglasgranulat hat sich jedoch dahingehend bewährt, dass bereits ein geringer Bindemittelanteil zur gleichmäßigen Benetzung des Blähglasgranulats und damit zur Herstellung einer homogenen Mischung ausreicht. Auf diese Weise kann ein sparsamer Umgang mit dem Bindemittel erfolgen, wodurch die Herstellungskosten gering gehalten werden.

Je nach Verwendungszweck kann es vorteilhaft sein, der homogenen Mischung aus Blähglasgranulat und Bindemittel Polystyrolkugeln als weiteren Leichtfüllstoff und/oder Glas-, Metall-, Kohle-, Polyester- oder Mineralfasern als Bewehrung beizugeben. Durch Zugabe von Polystyrolkugeln lassen sich die Herstellungskosten weiter reduzieren, wohingegen die Zugabe der vorstehend genannten Faserstoffe den Außenschichten eine höhere Festigkeit verleiht.

Alternativ oder ergänzend hierzu können in einem weiteren Verfahrensschritt ein Vlies und/oder Gewebe aus Glas-, Metall-, Kohle-, Polyester- oder Mineralfasern als Bewehrung in die Form oder die Form ersetzende Hilfsvorrichtung eingelegt werden. Weiterhin ist es möglich, ein derartiges in Bindemittel getränktes Vlies oder Gewebe nachträglich auf die jeweils zu bewehrende Oberfläche des Bauelementes aufzulegen. Diese Maßnahmen sind jedoch lediglich optional, da das nach dem erfindungsgemäßen Verfahren hergestellte Bauelement bereits eine für die meisten Verwendungszwecke ausreichende Stabilität besitzt.

Vorzugsweise wird zur Herstellung der homogenen Mischung ein Blähglasgranulat einer Korngröße von 0,1 bis 8,0mm, weiterhin vorzugsweise von 0,25 bis 4,0mm verwendet. Der Blähglasgranulatanteil in der homogenen Mischung beträgt zudem wenigstens 40 Vol-%. Ein hoher Anteil an Blähglasgranulat in der homogenen Mischung zur Ausbildung einer Außenschicht bewirkt, dass das derart hergestellte Bauelement ein gutes Brandverhalten sowie eine hohe Stabilität aufweist. Der Polystyrolkern dagegen verleiht dem Bauelement verbesserte Wärmedämmeigenschaften und trägt zudem zur Reduzierung des Gesamtgewichts bei.

Eine Kombination der zum Teil widersprüchlichen Eigenschaften der verschiedenen Schichten setzt einen ausreichenden Verbund der Schichten untereinander voraus. Erfindungsgemäß trägt hierzu insbesondere der Verfahrensschritt des Verdichtens und Aushärtens bei einer Temperatur von ≥90°C bei. Bei dem Herstellungsverfahren, das eine Schüttung aus Polystyrolkugeln zur Ausbildung der Kernschicht vorsieht, ist die Temperatur vorteilhafterweise derart gewählt, dass die Oberflächen der Polystyrolkugeln leicht anschmelzen, miteinander verkleben und dabei einen kraftschlüssigen Verbund eingehen.

Weiterhin bevorzugt werden zur Ausbildung der Kernschicht expandierte Polystyrolkugeln verwendet. Die Korngröße der expandierten Polystyrolkugeln beträgt dabei 0,25 bis 4,0 mm, vorzugsweise 0,5 bis 3,0 mm.

Zur Lösung der Aufgabe wird ferner ein platten- oder profilförmiges Bauelement vorgeschlagen, das unter Verwendung einer homogenen Mischung aus Blähglasgranulat und einem anorganischen oder organischen Bindemittel nach einem der vorstehend beschriebenen Verfahren hergestellt worden ist und erfindungsgemäß durch einen mehrschichtigen Aufbau mit einem Kern aus Polystyrol gekennzeichnet ist, wobei der Polystyrol-Anteil maximal 50 Vol-%, vorzugsweise maximal 30 Vol-% beträgt. Ein derartiges Bauelement weist durch den Kern aus Polystyrol verbesserte Wärmedämmeigenschaften sowie ein geringes Raumgewicht auf. Aufgrund des geringen Raumgewichtes ist es auf der Baustelle leicht handhabbar. Darüber hinaus bewirkt die Umhüllung des Kerns mit einer Blähglasgranulat-Bindemittel-Mischung ein gutes Brandverhalten, nämlich mindestens Baustoffklasse B1 nach DIN 4102, sowie eine für die meisten Verwendungszwecke ausreichend hohe Festigkeit. Sämtliche Vorzüge der einzelnen Schichten kommen somit zum Tragen. Das Bauteil ist demzufolge universell einsetzbar und zudem einfach und kostengünstig herstellbar.

Vorzugsweise sind die beidseitig der Polystyrol-Schicht angeordneten Blähglasgranulat enthaltenden Deckschichten im Wesentlichen gleich stark ausgebildet. In dem die den Polystyrolkern umgebenden außenliegenden Schichten nicht nur den gleichen Aufbau, sondern auch eine annähernd gleiche Stärke aufweisen, können beide Seiten als Vorder- bzw. Rückseite eingesetzt werden.

Weiterhin bevorzugt ist die Polystyrol-Schicht maximal so stark wie die dünnste der angrenzenden Blähglasgranulat enthaltenden Deckschichten ausgebildet. Dadurch wird verhindert, dass aufgrund der geringeren Steifigkeit des Kerns Teile der Deckschichten bei mechanischer Beanspruchung abplatzen. Die tragende Struktur wird von den außenliegenden Deckschichten gebildet, die daher bevorzugt eine im Vergleich zum Polystyrolkern zumindest gleich große Schichtstärke aufweisen.

Das Bauelement weist bevorzugt ein Raumgewicht von maximal 400kg/m³, vorzugsweise maximal 350kg/m³ auf. Beeinflussbar ist das Raumgewicht durch den Polystyrolanteil bezogen auf das Gesamtvolumen des Bauelementes und/oder durch Festlegung der jeweiligen Schichtstärken. Insbesondere bei der Ausbildung plattenförmiger Bauelemente, wie sie beispielsweise als Putzträgerplatte innerhalb einer Fassadenkonstruktion Verwendung finden, ermöglicht ein geringes Raumgewicht eine gute Handhabbarkeit des Bauelementes. Derartige Qualitäten sind auch im Innenausbau gefragt, wo solche Platten ebenfalls Einsatz finden.

Das Bauelement besitzt weiterhin bevorzugt eine Gesamtdicke von maximal 50mm, vorzugsweise eine Gesamtdicke zwischen 5mm und 20mm. Bei einer derartigen Platten- oder Profilstärke bleibt die Vielseitigkeit des erfindungsgemäßen Bauelements erhalten.

Weiterhin ist das Bauelement nach einem erfindungsgemäßen Verfahren hergestellt. Das erfindungsgemäße Verfahren trägt zur Ausbildung der vorteilhaften Eigenschaften des platten- oder profilförmigen Bauelements bei. Insbesondere gewährleistet der Einsatz des erfindungsgemäßen Verfahrens die einfache und kostengünstige Herstellung des erfindungsgemäßen platten- oder profilförmigen Bauelements.

## Patentansprüche

1. Verfahren zur Herstellung eines platten- oder profilförmigen Bauelementes, das insbesondere als Wand-, Decken- oder Fußbodenbauteil einsetzbar ist, unter Verwendung einer homogenen Mischung aus Blähglasgranulat und einem anorganischen oder organischen Bindemittel,
**dadurch gekennzeichnet, dass**
das Verfahren wenigstens die folgenden Schritte umfasst:
- Einbringen eines Teils der homogenen Mischung aus Blähglasgranulat und Bindemittel in eine Form oder in eine die Form ersetzende Hilfsvorrichtung im Falle eines formlosen Verfahrens, insbesondere bei der kontinuierlichen Produktion,
- Ausbilden einer Schicht aus Polystyrol durch Auflegen einer Polystyrol-Platte oder Aufbringen einer Schüttung aus Polystyrolkugeln auf der homogenen Mischung,
- Verteilen des restlichen Teils der homogenen Mischung auf der Polystyrol-Schicht,
- Verdichten durch Pressen und Aushärten zu einem platten- oder profilförmigen Bauelement unter Einwirkung von Wärme bei einer Temperatur von ≥90°C, wobei die maximale Temperatur zwischen 100°C und 120°C, vorzugsweise zwischen 100°C und 110°C, liegt.

2. Verfahren nach Anspruch 1, **dadurch gekennzeichnet, dass** als Bindemittel Epoxidharz verwendet wird.

3. Verfahren nach Anspruch 1 oder 2, **dadurch gekennzeichnet, dass** der homogenen Mischung aus Blähglasgranulat und Bindemittel Polystyrolkugeln als weiterer Leichtfüllstoff und/oder Glas-, Metall-, Kohle-, Polyester- oder Mineralfasern als Bewehrung beigegeben werden.

4. Verfahren nach einem der Ansprüche 1 bis 3, **dadurch gekennzeichnet, dass** in einem weiteren Verfahrensschritt ein Vlies und/oder Gewebe aus Glas-, Metall-, Kohle-, Polyester- oder Mineralfasern als Bewehrung in die Form oder die Form ersetzende Hilfsvorrichtung eingelegt wird.

5. Verfahren nach einem der Ansprüche 1 bis 4, **dadurch gekennzeichnet, dass** Blähglasgranulat einer Korngröße von 0,1bis 8,0 mm, vorzugsweise von 0,25 bis 4,0 mm, verwendet wird.

6. Verfahren nach einem der Ansprüche 1 bis 5, **dadurch gekennzeichnet, dass** der Blähglasgranulatanteil in der homogenen Mischung wenigstens 40 Vol-% beträgt.

7. Verfahren nach einem der Ansprüche 1 bis 6, **dadurch gekennzeichnet, dass** bei der Ausbildung der Kernschicht expandierte Polystyrolkugeln einer Korngröße von 0,25 bis 4,0 mm, vorzugsweise 0,5 bis 3,0 mm, verwendet werden.

8. Platten- oder profilförmiges Bauelement, das unter Verwendung einer homogenen Mischung aus Blähglasgranulat und einem anorganischen oder organischen Bindemittel nach einem Verfahren nach einem der Ansprüche 1 bis 7 hergestellt worden ist, gekennzeichnet durch einen mehrschichtigen Aufbau mit einem Kern aus Polystyrol, wobei der Polystyrol-Anteil maximal 50 Vol-%, vorzugsweise maximal 30 Vol-% beträgt.

9. Bauelement nach Anspruch 8, **dadurch gekennzeichnet, dass** die beidseitig der Polystyrol-Schicht angeordneten Blähglasgranulat enthaltenden Deckschichten im Wesentlichen gleich stark ausgebildet sind.

10. Bauelement nach Anspruch 8 oder 9, **dadurch gekennzeichnet, dass** die Polystyrol-Schicht maximal so stark wie die dünnste der angrenzenden Blähglasgranulat enthaltenden Deckschichten ausgebildet ist.

11. Bauelement nach einem der Ansprüche 8 bis 10, **dadurch gekennzeichnet, dass** das Raumgewicht maximal 400kg/m³, vorzugsweise maximal 350kg/m³ beträgt.

12. Bauelement nach einem der Ansprüche 8 bis 11, **dadurch gekennzeichnet, dass** die Gesamtdicke maximal 50 mm, vorzugsweise zwischen 5 mm und 20 mm beträgt.

## Claims

1. A method for manufacturing a panel-shaped or profiled construction element that can be used particularly as a wall, ceiling or floor element, using a homogeneous mixture of expanded glass granulate and an inorganic or organic binder,
**characterized in that**
the method comprises at least the following steps:
- Introducing a part of the homogeneous mixture of expanded glass granulate and binder into a mould, or into an aid device if the method is being executed without moulds, particularly in continuous production,
- Forming a layer of polystyrene, by applying a polystyrene panel or applying a bed of polystyrene balls to the homogeneous mixture,
- Distributing the remaining part of the homogeneous mixture over the polystyrene layer,
- Compacting by pressing and curing to form a panel-shaped or profiled component with the action of heat at a temperature of ≥90 °C, wherein the maximum temperature is between 100 °C and 120 °C, preferably between 100 °C and 110 °C.

2. The method according to claim 1, **characterized in that** epoxy resin is used as the binder.

3. The method according to either of claims 1 or 2, **characterized in that** polystyrene spheres are added to the homogeneous mixture of expanded glass granulate and binder as a further light filler material and/or fibers of glass, metal, carbon, polyester, or mineral fibers are added as a reinforcement.

4. The method according to any one of claims 1 to 3, **characterized in that** in a further process step, a nonwoven fabric and/or woven fabric of glass, metal, carbon, polyester, or mineral fibers is inserted in the mould or in the aid device serving instead of a mould as a reinforcement.

5. The method according to any one of claims 1 to 4, **characterized in that** expanded glass granulate having a grain size from 0.1 to 8.0 mm, preferably from 0.25 to 4.0 mm, is used.

6. The method according to any one of claims 1 to 5, **characterized in that** the proportion of expanded glass granulate in the homogeneous mixture is at least 40% by volume.

7. The method according to any one of claims 1 to 6, **characterized in that** expanded polystyrene beads having a grain size from 0.25 to 4.0 mm, preferably 0.5 to 3.0 mm, are used in the formation of the core layer.

8. Panel-shaped or profiled construction element which is produced by using a homogeneous mixture of expanded glass granulate and an inorganic or organic binder, in a method according to any one of claims 1 to 7, **characterized by** a multi-layer structure having a core of polystyrene, wherein the polystyrene content does not exceed 50% by volume, and preferably is 30% by volume at most.

9. Construction element according to claim 8, **characterized in that** covering layers containing expanded glass granulate and arranged on either side of the polystyrene-containing layer have substantially the same thickness.

10. Construction element according to either of claims 8 or 9, **characterized in that** the polystyrene layer is at most as thick as the thinnest of the adjacent cover layers containing expanded glass granulate.

11. Construction element according to any one of claims 8 to 10, **characterized in that** the density is nor more than 400 kg/m³, preferably not more than 350 g/m³.

12. Construction element according to any one of claims 8 to 11, **characterized in that** the total thickness is 50 mm at most, preferably between 5 mm and 20 mm.

## Revendications

1. Procédé de fabrication d'un élément de construction en forme de plaque ou de profilé qui peut s'utiliser notamment en tant que pièce de construction d'une paroi, d'un plafond ou d'un sol, en utilisant un mélange homogène de granulés de verre soufflé et d'un agent liant anorganique ou organique
**caractérisé en ce que**
le procédé comprend au moins les étapes suivantes :
- introduction d'une partie du mélange homogène de granulés de verre soufflé et d'agent liant dans un moule ou dans un dispositif auxiliaire remplaçant le moule dans le cas d'un procédé sans moule, notamment de la production continue,
- création d'une couche en polystyrène par pose d'un panneau en polystyrène ou par application de billes de polystyrène en vrac sur le mélange homogène,
- répartition de la partie restante du mélange homogène sur la couche de polystyrène,
- compactage par pressage et solidification en un élément de construction en forme de panneau ou de profilé sous l'action de chaleur à une température ≥ 90 °C, la température maximale se situant entre 100 °C et 120 °C, de préférence entre 100 °C et 110 °C.

2. Procédé selon la revendication 1, **caractérisé en ce qu'**on utilise en tant qu'agent liant de la résine époxy.

3. Procédé selon la revendication 1 ou la revendication 2, **caractérisé en ce qu'**on ajoute au mélange homogène de granulés de verre soufflé et d'agent liant des billes de polystyrène en tant que charge allégée supplémentaire et/ou des fibres de verre, des fibres métalliques, des fibres de carbone, des fibres de polyester ou des fibres minérales en tant qu'armature.

4. Procédé selon l'une quelconque des revendications 1 à 3, **caractérisée en ce que** dans une étape ultérieure du procédé, on insère dans le moule ou dans le dispositif auxiliaire remplaçant le moule un non-tissé et/ou un tissu en fibres de verre, en fibres métalliques, en fibres de carbone, en fibres de polyester ou en fibres minérales en tant qu'armature.

5. Procédé selon l'une quelconque des revendications 1 à 4, **caractérisé en ce qu'**on utilise des granulés de verre soufflé d'une grosseur de grains de 0,1 à 8,0 mm, de préférence de 0,25 à 4,0 m.

6. Procédé selon l'une quelconque des revendications 1 à 5, **caractérisé en ce que** la part de granulés de verre soufflé dans le mélange homogène est d'au moins 40 % en volume.

7. Procédé selon l'une quelconque des revendications 1 à 6, **caractérisé en ce que** lors de la création de la couche du coeur, on utilise des billes de polystyrène expansé d'une grosseur de grains de 0,25 à 4,0 mm, de préférence de 0,5 à 3,0 mm.

8. Elément de construction en forme de panneau ou de profilé qui a été fabriqué en utilisant un mélange homogène de granulés de verre soufflé et d'un agent liant anorganique ou organique d'après un procédé selon l'une quelconque des revendications 1 à 7, **caractérisé par** une structure multicouches avec un coeur en polystyrène, la part en polystyrène étant d'un maximum de 50 % en volume, de préférence d'un maximum de 30 % en volume.

9. Elément de construction selon la revendication 8, **caractérisé en ce que** les couches de couverture contenant des granulés de verre soufflé, placées de part et d'autre de la couche de polystyrène sont conçues en étant sensiblement de même épaisseur.

10. Elément de construction selon la revendication 8 ou la revendication 9, **caractérisé en ce que** la couche de polystyrène est conçue en étant au maximum aussi épaisse que la plus mince des couches de couverture adjacentes contenant des granulés de verre soufflé.

11. Elément de construction selon l'une quelconque des revendications 8 à 10, **caractérisé en ce que** le poids spécifique est d'un maximum de 400 kg/m³, de préférence d'un maximum de 350 kg/m³.

12. Elément de construction selon l'une quelconque des revendications 8 à 11, **caractérisé en ce que** l'épaisseur totale est d'un maximum de 50 mm, de préférence comprise entre 5 mm et 20 mm.
